# EUROPEAN PATENT APPLICATION

(11) **EP 3 184 429 A1**
(43) Date of publication of application: **28.06.2017**
(21) Application number: 15382650.8
(22) Date of filing: 21.12.2015
(51) Int. Cl.: B64D 13/06

(54) **AIRCRAFT WITH A BLEED SUPPLY HYBRID ARCHITECTURE**

(71) Applicant: Airbus Operations, S.L., 28906 Getafe (Madrid) (ES)
(72) Inventor: RAMOS-PAUL LASTRA, Pedro, Felipe, 28906 GETAFE (Madrid) (ES); JUAREZ BECERRIL, Alberto, 28906 GETAFE (Madrid) (ES); SAÑUDO OBREGON, Cristina, 28906 GETAFE (Madrid) (ES)
(74) Representative: Carpintero Lopez, Francisco

(57) **Abstract**

The invention refers to an aircraft comprising a bleed supply architecture (1), the aircraft having a nose section, a central section, and a rear section, and comprising a pneumatic system (2) for supplying compressed bleed air to the different aircraft systems, a bleed supply for providing bleed air to the pneumatic system (2), and an auxiliary power unit (4). The aircraft additionally comprises an electric powered load compressor (5) coupled to the pneumatic system (2) for providing bleed air to said pneumatic system (2). The auxiliary power unit (4) is adapted for feeding electric power to the load compressor (5). The load compressor (5) and the pneumatic system (2) are installed at the same central section of the aircraft to reduce pressure losses.

## Description

### Object of the invention

The present invention refers to a bleed supply architecture for an aircraft, to improve conventional bleed supply architectures in which the auxiliary power unit of the aircraft is used for feeding the aircraft pneumatic system.

An object of the invention is to provide an aircraft with a bleed supply architecture that complies with the more electric aircraft (MEA) tendency, and at the same time that reduces pressure loses in the bleed air supply to the pneumatic system.

Another object of the present invention is to provide an aircraft with a bleed supply architecture that minimizes the weight of conventional auxiliary power unit bleed supply architectures.

Another object of the present invention is to provide an aircraft with a simplified architecture for the bleed air supply.

### Background of the invention

The auxiliary power unit (APU) is a gas turbine engine that traditionally supplies electric and pneumatic power to the aircraft systems as an auxiliary or secondary source of power. The APU allows the aircraft to be autonomous of external electric and pneumatic power sources on ground and in-flight.

This electric and pneumatic power can be provided to the aircraft separately or in combination. Electric power has priority over pneumatic power. The pneumatic power provides compressed air for the cabin and power for main engines starting.

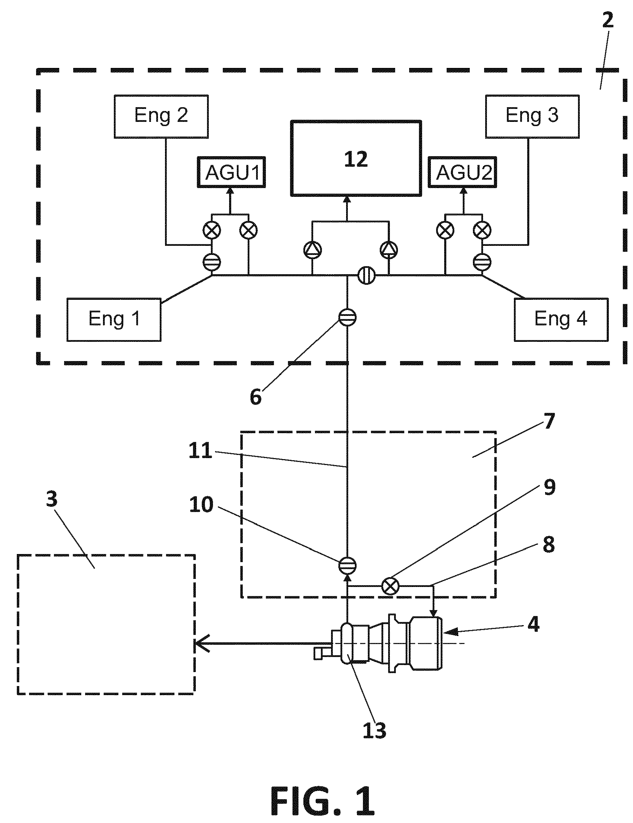

Figure 1 shows a conventional APU bleed supply architecture. As shown, the APU is adapted for supplying both electric and pneumatic power to feed the electric 3 and the pneumatic systems 2 of the aircraft, typically comprising several engines and the environmental control system 12. This way, the bleed supply is provisioned by the APU.

This traditional APU bleed supply 7 at least comprises an APU load compressor 13, an APU bleed valve 10, a surge control valve 9, and a surge duct 8. The APU bleed valve 10 enables controlling the compressed bleed air passage from the APU 4 towards the pneumatic system 2. Compressed air from the APU load compressor 13 is used for aircraft pneumatic requirements. Air in excess of aircraft requirements is diverted overboard through the surge duct 8 and surge control valve 9 to the exhaust. Additionally, the APU bleed supply 7 involves an APU bleed supply line 11 extended between the APU 4 and the pneumatic system 2 for conveying the bleed air, and an isolation valve 6 to protect the APU 4 when it is not supplying compressed air.

Currently, aircraft designs are tending to provide a more electric aircraft (MEA).
The MEA concept provides for the utilization of electric power for all non-propulsive systems. Traditionally these non-propulsive systems are driven by a combination of different secondary power sources such as hydraulic, pneumatic, mechanical and electric.

Therefore, in order to meet this more electric power tendency for the aircrafts, a new bleed supply architecture is desired.

Additionally, it would therefore be desirable to provide an aircraft with a bleed supply architecture that reduces the weight and complexity of conventional APU bleed supply architectures, at the same time that improves the efficiency of the bleed air supply.

### Summary of the invention

The present invention overcomes the above mentioned drawbacks by providing an aircraft with a more electric bleed supply architecture that achieves a weight and cost reduction with respect to conventional APU bleed supply architectures. Additionally, the invention improves the efficiency of the bleed air supply drastically reducing pressure loses in the bleed air supply.

The invention refers to an aircraft comprising a bleed supply architecture, the aircraft having a nose section, a central section, and a rear section, and comprising a pneumatic system for supplying bleed air to the different aircraft systems, a bleed supply for providing compressed bleed air to the pneumatic system, and an auxiliary power unit. According to the invention, the aircraft additionally comprises an electric powered load compressor that is coupled to the pneumatic system for providing bleed air to said pneumatic system. The auxiliary power unit is adapted for feeding electric power to the mentioned electrical load compressor. And both the load compressor and the pneumatic system are installed at the central section of the aircraft to reduce pressure losses.

By providing an electric powered load compressor, the invention allows bleed air to be supplied to the pneumatic system without requiring the pneumatic power generated by the APU. This way, the bleed supply architecture allows the use of an APU that is exclusively adapted for providing electric power. Thus, the invention meets the current aircraft power tendencies, since a more electric aircraft is provided.

Additionally, by placing the electric powered load compressor and the pneumatic system at the same section of the aircraft, the invention offers a more efficient architecture by avoiding pressure losses in the bleed supply.

In addition, this placement of both the load compressor and the pneumatic system enables saving space, thereby offering extra room for either harness routing for any other new or existing aircraft system, or placing any new or existing aircraft equipment's.

Also, by providing a dedicated bleed supply by means of the load compressor, instead of the traditional APU bleed supply, an only-electrical APU is used, and a simplified architecture is achieved.

The use of an APU that is not adapted to supply pneumatic power, allows at least removing the APU bleed valve 10, the surge control valve 9, the surge duct 8, and the APU bleed supply line 11. This way, the invention achieves a significant weight and cost reduction. Further, the removal of the APU bleed supply allows reducing installation, recurrent and direct maintenance costs.

Further, by providing a dedicated bleed supply, the invention enables decoupling the pneumatic system from the APU operation. This way, bleed air can be provided to the pneumatic system although the APU is not running.

### Brief description of the drawings

For a better comprehension of the invention, the following drawings are provided for illustrative and non-limiting purposes, wherein:
Figure 1 shows a schematic view of a conventional APU bleed supply architecture, in which the APU supplies electric and pneumatic power.
Figure 2 shows a schematic view of a bleed supply architecture, according to an embodiment of the present invention.

### Preferred embodiment of the invention

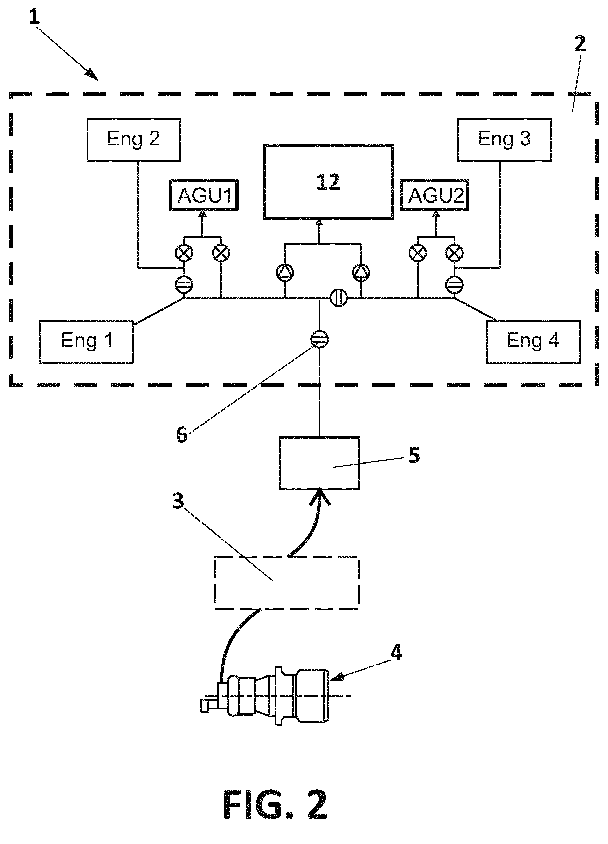

Figure 2 shows a schematic view of a bleed supply architecture 1 that comprises a pneumatic system 2 for supplying bleed air to the aircraft, an electric powered load compressor 5, and an auxiliary power unit 4. According to the invention, the electrical load compressor 5 is coupled to the pneumatic system 2 for providing bleed air to said pneumatic system 2, and the auxiliary power unit 4 is adapted for feeding electric power to the load compressor 5.

The invention offers a more electric aircraft by providing an electric powered load compressor 5, since the pneumatic power generated by the auxiliary power unit 4 is no longer needed for providing bleed air to the aircraft pneumatic system 2. Thus, an auxiliary power unit adapted for solely supplying electric power (an only-electrical APU) can be provided.

As shown, the load compressor 5 and the pneumatic system 2 are nearly arranged to reduce pressure losses in the bleed air supply. According to the invention, both the load compressor 5 and the pneumatic system 2 are installed at the same central section of the aircraft to improve the bleed supply efficiency.

The invention requires less space than conventional APU bleed supply architectures, so that the invention allows saving space in the aircraft.

In addition, the invention requires less components than conventional APU bleed supply architectures, providing a simplified architecture, with a significant weight reduction.

According to a preferred embodiment, the aircraft further comprises an electric system 3 for providing electric power to the aircraft, wherein the auxiliary power unit 4 is coupled to said electric system 3 for supplying electric power, and wherein the load compressor 5 is powered by means of said electric system 3.

As shown in Figure 2, the auxiliary power unit 4 feeds the load compressor 5 through the aircraft electric system 3.

According to another preferred embodiment, the pneumatic system 2 comprises an isolation valve 6, and wherein the load compressor 5 is coupled to the pneumatic system 2 by said isolation valve 6. Thus, the invention allows maximizing the commonality and reuse of components from the currently existing APU bleed supply architectures.

Preferentially, the load compressor 5 has different programmable operating speeds for providing bleed air supply. This way, the electrically driven load compressor 5 may have different operational speeds and operate although the auxiliary power unit 4 is not running. This improves the state of the art, since the current APU load compressor operates at constant speed. Also, the invention decouples the bleed supply from the auxiliary power unit 4 operation, providing a more reliable and robust bleed supply.

Preferentially, the load compressor 5 is controllable by the pneumatic system 2. This way, the pneumatic system 2 comprises a controller configured for monitoring and deciding the bleed air required by the aircraft at any moment.

According to another preferred embodiment, the load compressor 5 and the pneumatic system 2 are installed at the belly fairing of the aircraft. The belly fairing is a part of the central section of the aircraft, and said central section is arranged between the nose and the rear section of the aircraft.

With respect to conventional APU bleed supply architectures (Figure 1), the invention presents the following advantages:
- Weight reduction due to the only-electrical APU concept is lighter than current APU designs. Only-electrical APUs does not have APU load compressor, APU bleed valve, surge control valve, and surge duct.
- Weight reduction due to the removal of the APU bleed supply line.
- Weight reduction in the aircraft structure reinforcements due to lighter mass has to be supported.
- APU life improvement due to a continuous operation duty cycle. Changes in the APU electrical demand has no relevant effects on the APU working conditions. APU bleed demand is the critical factor for APU life.
- The bleed supply is available even when the APU is off. The bleed supply can be automatically controlled in function of the pneumatic system demand.
- Better operational reliability due to the more simple APU design. Additionally, the only-electrical APU has less inertia during its operation than conventional APUs because it does not have to move the load compressor rotating components.

## Claims

1. An aircraft comprising a bleed supply architecture (1), the aircraft having a nose section, a central section, and a rear section, and comprising:
- a pneumatic system (2) for supplying bleed air to the aircraft,
- a bleed supply for providing compressed bleed air to the pneumatic system (2), and
- an auxiliary power unit (4),
**characterized in that** additionally comprises an electric powered load compressor (5),
- wherein said load compressor (5) is coupled to the pneumatic system (2) for providing bleed air to said pneumatic system (2),
- wherein the auxiliary power unit (4) is adapted for feeding electric power to the load compressor (5),
- and, wherein both the load compressor (5) and the pneumatic system (2) are installed at the central section of the aircraft to reduce pressure losses.

2. An aircraft comprising a bleed supply architecture (1), according to claim 1, further comprising an electric system (3) for providing electric power to the aircraft, wherein the auxiliary power unit (4) is connected to said electric system (3) for supplying electric power, and wherein the load compressor (5) is powered by means of said electric system (3).

3. An aircraft comprising a bleed supply architecture (1), according to any preceding claims, wherein the pneumatic system (2) comprises an isolation valve (6), and wherein the electrical load compressor (5) is coupled to the pneumatic system (2) by said isolation valve (6).

4. An aircraft comprising a bleed supply architecture (1), according to any preceding claims, wherein the auxiliary power unit (4) is adapted for solely providing electric power.

5. An aircraft comprising a bleed supply architecture (1), according to any preceding claims, wherein the load compressor (5) has different programmable operating speeds for providing bleed air supply.

6. An aircraft comprising a bleed supply architecture (1), according to any preceding claims, wherein the load compressor (5) is controllable by the pneumatic system (2).

7. An aircraft comprising a bleed supply architecture (1), according to any preceding claims, wherein both the load compressor (5) and the pneumatic system (2) are installed at the belly fairing of the aircraft.
